# EUROPEAN PATENT APPLICATION

(11) **EP 2 913 951 A1**
(43) Date of publication of application: **02.09.2015**
(21) Application number: 14305271.0
(22) Date of filing: 26.02.2014
(51) Int. Cl.: H04L 1/16, H04L 1/00

(54) **Apparatus, method and computer program for controlling information related to an acknowledgment of a reception of a payload data packet, base station transceiver and mobile transceiver**

(71) Applicant: ALCATEL LUCENT, 92100 Boulogne-Billancourt (FR)
(72) Inventor: Braun, Volker, 70435 Stuttgart (DE); Dötsch, Uwe, 70435 Stuttgart (DE)
(74) Representative: 2SPL Patentanwälte PartG mbB

(57) **Abstract**

Embodiments provide an apparatus, a method and a computer program for controlling information related to an acknowledgment of a reception of a payload data packet. Embodiments further provide a base station transceiver and a mobile transceiver comprising the apparatus. The control apparatus (10) is operable to control information related to acknowledgment of a reception of a payload data packet. The apparatus (10) comprises a control module (12) operable to determine information related to a format of the payload data packet. The information related to the format of the payload data packet comprising information related to a number of data blocks comprised in the payload data packet. The control module (12) is further operable to determine information related to a format of an acknowledgement data packet, which is associated with the payload data packet, based on the information related to the format of the payload data packet. The information related to the format of the acknowledgement data packet comprises information related to a number of data blocks per acknowledgment information element in the acknowledgement data packet. Two different formats of the acknowledgment data packet indicate different numbers of data blocks being acknowledged per acknowledgment information element. The apparatus (10) further comprises an interface (14), which is operable to provide the information related to the format of the acknowledgement data packet.

## Description

### Technical Field

Embodiments relate to an apparatus, a method and a computer program for controlling information related to an acknowledgment of a reception of a payload data packet, embodiments further relate to a base station transceiver and to a mobile transceiver, more particularly but not exclusively, to a control mechanism for an acknowledgement or feedback data rate.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. The demands are growing for both directions of transmission, i.e. for the DownLink (DL), i.e. for transmission from the network infrastructure to a mobile transceiver, as well as in the UpLink (UL), i.e. in the direction from a mobile transceiver to the network infrastructure.

One transmission mechanism in use is Automatic Repeat reQuest or Automatic Repeat Query (ARQ). ARQ may be considered as a protocol implementing a feedback mechanism for payload transmissions enabling control of transmission errors. Correctly received payload data packets are acknowledged and incorrectly received payload data packets are disacknowledged, where different variants including explicit and implicit signaling are conceivable. For example, ACKnowledgements (ACKs) may be provided by means of messages or information elements transmitted by a receiver of a payload data packet indicating that the data packet was correctly received. Negative ACKnowledgements (NACKs) may, for example, be assumed when an ACK is not received after a certain time, which may also be referred to as timeout period, which is a predefined time period determining a retransmission of a data packet in case of elapse without ACK reception.

Some mobile communication systems use Hybrid ARQ (HARQ), which combines error-correction coding and error control in that retransmissions may include additional redundancy for an unsuccessfully decoded payload data so to enable further error correction capabilities at the decoder and increase a decoding success rate. This mechanism may also be referred to as incremental redundancy. Another variant is also referred to a chase combining, where a retransmitted data packet is soft-combined with a previously received version of the data packet, which was unsuccessfully decoded. The soft-combining may improve a signal-to-noise ratio in the soft-combined data packet as compared to the previously received data packet and therefore increase chances for successful decoding.

For ARQ mechanisms a feedback is provided to a transmitter of a data packet based on which retransmissions are triggered. The feedback consumes resources or data transmission capabilities of a link in backward direction compared to the payload data transmission. The data rate on such a feedback channel or the resources consumed for ARQ depend on the number of acknowledgments or the number of data packets to be acknowledged, where there is a trade-off with the retransmission resource consumption.

Segment HARQ is a HARQ technique, where a packet P is partitioned into N segments according to P = [s1, s2, ..., sN], and for each segment the receiver reports an ACK/NACK message to the transmitter to indicate whether a segment si, i=1..N, was correctly received. Segments si for which the transmitter receives a NACK will be retransmitted, e.g. together with applying Incremental Redundancy (IR) or Chase Combining (CC).

Typically a segment si = ENC([pi, ci ]) may be obtained by encoding a payload pi appended by a Cyclic Redundancy Check (CRC) ci, e.g. by using a convolutional Turbo ENCoder (ENC), similar to code block segmentation as, for example, used in Long Term Evolution (LTE). CRC may also be omitted and ACK/NACK may be directly derived from reliability information in the decoder.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a method and a computer program for controlling information related to an acknowledgment of a reception of a payload data packet. Embodiments further provide a base station transceiver and a mobile transceiver comprising such an apparatus. Embodiments may provide a control mechanism for an acknowledgement data rate in that a format of an acknowledgment is adapted to a format of respective payload data. For example, embodiments may enable a fixed or limited data rate feedback for a varying data rate payload transmission with a varying number of payload data blocks.

Embodiments provide a control apparatus operable to control information related to acknowledgment of a reception of a payload data packet. The apparatus comprises a control module, which is operable to determine information related to a format of the payload data packet. The information related to the format of the payload data packet comprises information related to a number of data blocks comprised in the payload data packet. The control module is further operable to determine information related to a format of an acknowledgement data packet, which is associated with the payload data packet, based on the information related to the format of the payload data packet. The information related to the format of the acknowledgement data packet comprises information related to a number of data blocks per acknowledgment information element in the acknowledgement data packet. Two different formats of the acknowledgment data packet indicate different numbers of data blocks being acknowledged per acknowledgment information element. The apparatus further comprises an interface, which is operable to provide the information related to the format of the acknowledgement data packet. Embodiments may enable acknowledgment format adaptation to a number of data blocks in a payload data packet. That is to say that the format, mapping or interpretation of the acknowledgment information elements in the acknowledgment data packet may be adapted. For example, an acknowledgment information element, such as a bit, may refer to an acknowledgment in one format, mapping or interpretation, and the acknowledgment information element, such as the same bit, may refer to reliability information in another format, mapping or interpretation.

In some embodiments the payload data packet corresponds to a transport block of data comprising one or more data segments. A data segment comprises one or more data blocks and a data block may correspond to an encoded block of data, to which it may also be referred to as code block. A data or code block may comprise one or more information elements, such as one or more bits. That is to say that the information related to the format of the payload data packet, which comprises information related to a number of data blocks comprised in the payload data packet, may refer to information indicating payload data packets of different sizes, such as payload data packets comprising different numbers of bits, e.g. in terms of different number of data blocks of the same size. Likewise, the two different formats of the acknowledgment data packet indicating different numbers of data blocks being acknowledged per acknowledgment information element may indicate different numbers of information elements or bits being acknowledged per acknowledgment information element.

The format of the acknowledgment data packet indicates one or a defined number of acknowledgment information elements per data segment. Embodiments may enable a fixed assignment of acknowledgement information elements to data segments with a variable assignment of data or code blocks per data segment. Embodiments may keep the acknowledgment data rate below a maximum level. In some embodiments the format of the acknowledgment data packet may indicate one or more acknowledgment information elements relating to reliability information of one or more data segments. For example, a first format of the payload data packet may indicate two data segments being comprised in the payload data packet and an associated first format of the acknowledgment data packet may indicate one acknowledgment information element, such as one bit, per data segment. Therewith one acknowledgment information element (one bit) acknowledges the number of data blocks being comprised in a data segment. A second format of the payload data packet may indicate one data segment being comprised in the payload data packet, which may comprise the same data amount as with the first format (for example twice the number of data blocks of the same size as compared to one segment of the first format).

An associated second format of the acknowledgment data packet may indicate one acknowledgment information element, such as two bits, for the one data segment in the payload data packet of the second format. Now, one acknowledgment information element, e.g. comprising two bits, is used to acknowledge twice the number of data blocks as compared to the first format for the acknowledgement data packet. For example, if two bits are mapped on a transmission symbol, for example, a Quaternary Phase Shift Keying (QPSK) symbol, then there are four different transmission symbols to transport the information of the two bits. One of these symbols may be used for acknowledgment and the remaining three other transmission symbols may be used for different dis-acknowledgments. The different dis-acknowledgments may differ in reliability information they provide. That is to say different levels of reliability information may be indicated, for example, different measures for an error rate in the received payload data packet, different desired retransmission formats, respectively. In other words, the same acknowledgment data packet may be used in different formats, mappings or interpretations in association with different formats, mappings or interpretations for the payload data packet. One format, mapping or interpretation may be acknowledgment per segment and another may be reliability information for the payload data packet or a transport block.

In embodiments the apparatus may be operable on a transmitter or receiver side or on both. The control apparatus may further comprise a receiver module, which is operable to receive the payload data packet, and a transmitter module, which is operable to transmit the acknowledgement data packet. The control module may then be operable to compose the acknowledgment data packet and to provide the acknowledgment data packet to the transmitter module for transmission. Embodiments may enable determination of an acknowledgment format at the payload receiver. In some embodiments, the control module may be operable to determine the information related to the format of the acknowledgement data packet using the receiver module. The receiver module may be operable to receive the information related to the format of the acknowledgement data packet and/or the information related to the format of the payload data packet from a transmitter of the payload data packet. The information related to the format of the acknowledgment data packet may hence be implicitly communicated by the transmitter of the payload data packet through the format of the payload data packet. The information related to the format of the acknowledgment data packet may be explicitly communicated by the transmitter of the payload data packet through one or more information elements indicating the format of the acknowledgment data packet. Embodiments may provide an efficient signaling concept for the format of the acknowledgment data packet on the receiver side.

Alternatively or additionally the control apparatus may comprise a transmitter module, which is operable to transmit the payload data packet, and a receiver module, which is operable to receive the acknowledgment data packet. Embodiments may provide efficient acknowledgement format determination on the transmitter and/or the receiver side of the payload data packet. In some embodiments the control module may be operable to use the transmitter module to signal the information related to the format of the acknowledgement data packet and/or the information related to the format of the payload data packet to a receiver of the payload data packet, in line with the above. Embodiments may hence enable implicit or explicit signaling of the acknowledgment format on the transmitter side.

In some embodiments, the control module may be operable to assign a first format of an acknowledgement data packet to a first format of a payload data packet. The control module may be operable to assign a second format of an acknowledgement data packet to a second format of a payload data packet. The second format of the payload data packet may comprise a higher number of data blocks than the first format of the payload data packet. The second format of the acknowledgment data packet may comprise as many acknowledgment information elements as the first format of the acknowledgment data packet. Embodiments may enable using the same number of acknowledgment information elements for different numbers of data blocks and therefore reduce or even avoid rate variations for the acknowledgment. For example, the first format of the acknowledgement data packet may indicate at least one acknowledgement information element in the acknowledgement data packet, which comprises reliability information related to an incorrectly received data block. Embodiments may enable multipurpose acknowledgement information elements, e.g. for acknowledgment indication and for reliability information, which may help the transmitter of the payload data packet to select a proper, better or adapted retransmission format for a retransmission.

In some embodiments the first format of the payload data packet may indicate one data block in the payload data packet. The first acknowledgment format may indicate one acknowledgment information element for acknowledgement of the reception of the data block and one acknowledgment information element for information related to a reception quality in case the payload data packet is received incorrectly. The second format of the payload data packet may indicate two data blocks in the payload data packet. The second acknowledgment format may indicate one acknowledgment information element for acknowledgement of the reception of one of the two data blocks and one acknowledgment information element for acknowledgement of the reception of the other of the two data blocks. Embodiments may enable flexible assignment of acknowledgment information elements to different numbers of data blocks, for different purposes, respectively.

In some embodiments the first format of the payload data packet may indicate two data blocks in the payload data packet. The first acknowledgment format may indicate one acknowledgment information element for acknowledgement of the reception of one of the two data blocks and one acknowledgment information element for acknowledgement of the reception of the other of the two data blocks. The second format of the payload data packet may indicate more than two data blocks in the payload data packet. The second acknowledgment format may indicate one acknowledgment information element for acknowledgement of the reception of more than one of the more than two data blocks and one acknowledgment information element for the other one or more data blocks of the more than two data blocks in the payload data packet. Embodiments may enable flexible assignment of acknowledgment information elements.

In embodiments an acknowledgment information element in the acknowledgement data packet may correspond to a binary value. Embodiments may enable simple and efficient acknowledgement provision. Embodiments further provide a base station transceiver of a mobile communication system comprising the above described apparatus. Embodiments further provide a mobile transceiver of a mobile communication system comprising the above described apparatus.

Embodiments further provide a method for controlling information related to acknowledgment of a reception of a payload data packet. The method comprises determining information related to a format of the payload data packet. The information related to the format of the payload data packet comprises information related to a number of data blocks comprised in the payload data packet. The method further comprises determining information related to a format of an acknowledgement data packet, which is associated with the payload data packet, based on the information related to the format of the payload data packet. The information related to the format of the acknowledgement data packet comprises information related to a number of data blocks per acknowledgment information element in the acknowledgement data packet. Two different formats of the acknowledgment data packet indicate different numbers of data blocks being acknowledged per acknowledgment information element. The method further comprises providing the information related to the format of the acknowledgement data packet.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a control apparatus operable to control information related to an acknowledgement;
Fig. 2 illustrates a two bit HARQ feedback of an embodiment; and
Fig. 3 illustrates a block diagram of a flow chart of an embodiment of a method for controlling information related to acknowledgment.

### Description of Embodiments

Various example embodiments will now be described more fully with reference to the accompanying drawings in which some example embodiments are illustrated. In the figures, the thicknesses of lines, layers or regions may be exaggerated for clarity. Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following some embodiments of an apparatus, a method and a computer program operable to control or for controlling information related to an acknowledgment of a reception of a payload data packet will be described. Embodiments further provide a base station transceiver and a mobile transceiver comprising such an apparatus.

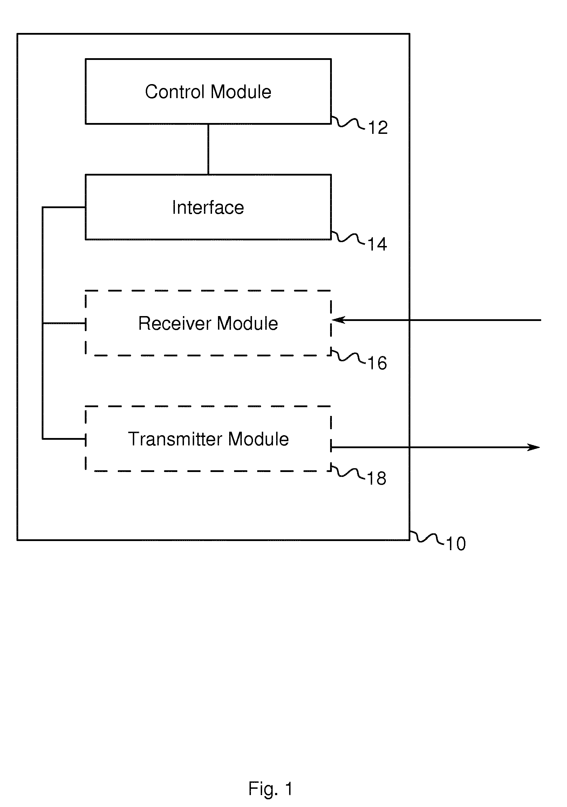

Embodiments may provide a control mechanism for an acknowledgement data rate in that a format of an acknowledgment is adapted to a format of respective payload data. For example, embodiments may enable feedback with a fixed or limited data rate for payload transmission with a varying data rate or a varying number of payload data blocks. Fig. 1 illustrates a block diagram of an embodiment of a control apparatus 10 operable to control information related to an acknowledgement of a reception of a payload data packet. The apparatus 10 comprises a control module 12.

In embodiments the control module 12 may be implemented using one or more processing units, one or more processing devices, any means for processing, such as a processor, a computer or a programmable hardware component being operable with accordingly adapted software. In other words, the described functions of the control module 12 may as well be implemented in software, which is then executed on one or more programmable hardware components. Such hardware components may comprise a general purpose processor, a Digital Signal Processor (DSP), a micro-controller, etc.

The control module 12 is operable to determine information related to a format of the payload data packet. The information related to the format of the payload data packet comprises information related to a number of data blocks comprised in the payload data packet. The control module 12 is further operable to determine information related to a format of an acknowledgement data packet, which is associated with the payload data packet, based on the information related to the format of the payload data packet. The information related to the format of the acknowledgement data packet comprises information related to a number of data blocks per acknowledgment information element in the acknowledgement data packet. Two different formats of the acknowledgment data packet, or at least two different formats of the acknowledgment data packet, indicate different numbers of data blocks to be acknowledged per acknowledgment information element. The control apparatus 10 further comprises an interface 14, which is operable to provide the information related to the format of the acknowledgement data packet.

In embodiments an interface of an entity may correspond to any interface adapted to the respective communication or access technology. In some embodiments the control apparatus 10 may have different interfaces. For example, the control apparatus may include a first interface operable to communicate with a receiver module 16 and a second interface operable to communicate with a transmitter module 18, which are also shown in Fig. 1 as optional components. The one or more interfaces 14 may use the same or different access technologies, protocols, media, etc.

As further shown in Fig. 1 the control module 12 is coupled to the interface, which may be further coupled to the receiver module 16 and/or to the transmitter module 18.

The receiver module 16 and the transmitter module 18 may be implemented as one or more receiver/transmitter/transceiver devices, one or more receiver/transmitter/transceiver units, any means for receiving/transmitting/transceiving, i.e. receiving and/or transmitting etc.

A receiver/transmitter/transceiver or receiver/transmitter/transceiver module 16, 18 may be any means for transceiving, i.e. receiving and/or transmitting etc., and it may comprise typical receiver and transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

In other words, in the embodiment depicted in Fig. 1 the control apparatus 10 further comprises the optional receiver module 16, which is operable to receive the payload data packet, and the optional transmitter module 18, which is operable to transmit the acknowledgement data packet. Additionally or alternatively, the transmitter module 18 may be operable to transmit the payload data packet, and the receiver module 16 may be operable to receive the acknowledgment data packet. Hence, the control apparatus 10 may be located on a receive side or on a transmitter side or on both sides.

In the following embodiments the payload data packet corresponds to a transport block of data comprising one or more data segments. A data segment comprises one or more data blocks and a data block corresponds to an encoded block of data to which it is also referred to as code block. The format of the acknowledgment data packet indicates one acknowledgment information element per data segment. In the following embodiment an acknowledgment information element in the acknowledgement data packet corresponds to a binary value, namely 1bit.

Moreover, an embodiment will be described in which a feedback overhead is contained or fixed in a communication scenario using segment HARQ. In other words in the following embodiment it will be referred to a communication system or network according to the LTE specifications. In general, the control apparatus 10 may be part of a communication system using ARQ, for example, the control apparatus may be operable or comprised in a base station transceiver of the mobile communication system or in a mobile transceiver of the mobile communication system. That is to say that the respective acknowledgement control may be applied in both directions, the uplink and the downlink.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

The following notation will be used subsequently:
N: number of segments of a transport block,
Nc: number of code blocks of a transport block, and
Nsc: number of code blocks per segment.

With segment HARQ the number of ACK/NACK feedback messages may be determined by the number of segments N. When using segmentation similar to code block segmentation in LTE, then the number of segments increases with increasing data rate, i.e. when a small packet is transmitted a single ACK/NACK is reported, and when a larger packet is transmitted multiple ACK/NACKs are reported. This may cause that the ACK/NACK feedback data rate from/to a user or mobile transceiver may be time-variant due to fluctuations of the packet size caused by small scale or large scale fading or by different applications of the user. As ACK/NACK feedback resources are a limited resource, typically shared among the users of the system, adequate mappings of code blocks to segments and of segments to ACK/NACK may be defined in embodiments, for example, embodiments may fix the ACK/NACK feedback rate and modulation scheme of a user.

In the following an embodiment will be described, which implements a fixed rate ACK/NACK feedback scheme with Segment HARQ, for example, for a user an N bit ACK/NACK feedback rate is (semi-statically) configured. That is to say N acknowledgment information elements are used in the acknowledgement data packet. A segment will be defined as a function of the number Nc of code blocks contained in a transport block, to contain one or multiple code blocks, such that the number of segments is no larger than N.

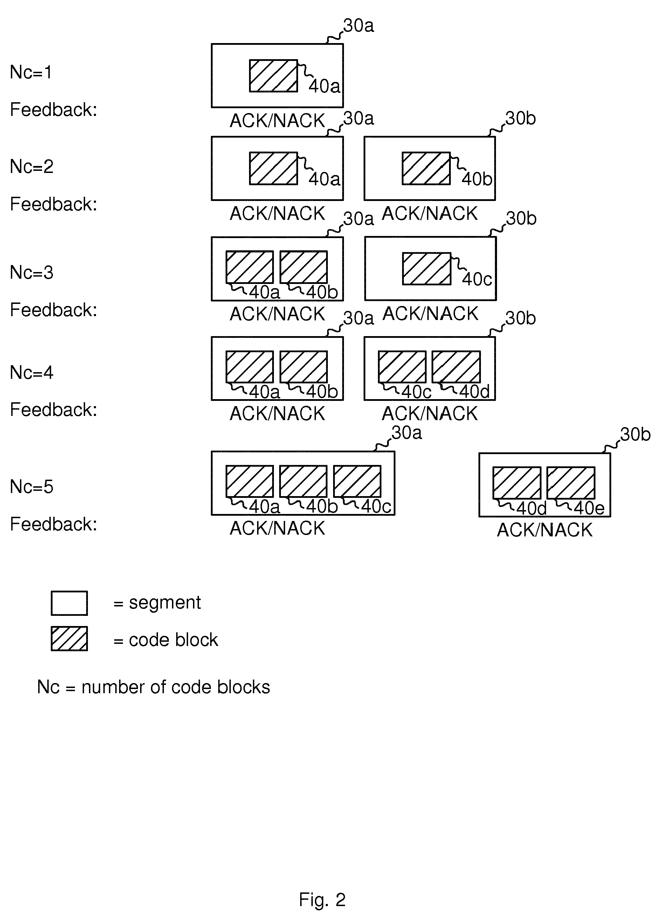

In an embodiment a 2bit feedback is used, where it is assumed that Nc increases (∼linearly) with the size of the transport block. Fig. 2 illustrates a two bit HARQ feedback of an embodiment. Fig. 2 shows a table with different formats for a payload data packet and different associated formats for an acknowledgement data packet. Except for the first rows in the table, where there is only a single data segment 30a with a single code block 40a in a transport block, there are always N=2 data segments 30a and 30b with different numbers of code blocks 40a, 40b, 40c, 40d, an 40e, depending on Nc=1..5. In the present embodiment there is 1bit feedback per data segment 30a, 30b. The format of the acknowledgment data packet may indicate one or more acknowledgment information elements relating to reliability information of one or more data segments 30a, 30b, as will also be detailed subsequently.

In other words, in the present embodiment the control module 12 is operable to assign a first format of an acknowledgement data packet to a first format of a payload data packet. The control module 12 is operable to assign a second format of an acknowledgement data packet to a second format of a payload data packet. The second format of the payload data packet comprises a higher number of data blocks Nc than the first format of the data packet. The second format of the acknowledgment data packet comprises as many acknowledgment information elements N as the first format of the acknowledgment data packet.

In case of a single code block 30a, Nc=1, as illustrated in the first row of Fig. 2, a 2bit ACK/NACK is reported which may include reliability information. That is to say that in this embodiment, the first format of the acknowledgement data packet for Nc=1 indicates at least one acknowledgement information element (the second bit of the feedback in the acknowledgement data packet), which comprises reliability information related to an incorrectly received data block.

For this case, the first format, Nc=1, of the payload data packet or transport block indicates one data block 40a in the payload data packet, and the first acknowledgment format indicates one acknowledgment information element, for example the first of the two feedback bits, for acknowledgement of the reception of the data block 40a and one acknowledgment information element, for example the second of the two feedback bits, for information related to a reception quality in case the payload data packet 40a is received incorrectly. The second format of the payload data packet, for example Nc=2 in Fig. 2, may indicate two data blocks 40a, 40b in the payload data packet or transport block. The second acknowledgment format indicates one acknowledgment information element, one bit for segment 30a, for acknowledgement of the reception of one of the two data blocks 40a, and one acknowledgment information element, another bit for segment 30b, for acknowledgement of the reception of the other of the two data blocks 40b. In other words, in case of Nc=2 code blocks, a segment 30a, 30b may be defined as a single code block 40a, 40b, 2bit ACK/NACK may be reported with a separate ACK/NACK-bit per segment 30a, 30b.

In case of Nc=3 code blocks, as shown in Fig. 2, a first segment 30a may be defined as a pair of code blocks 40a, 40b and a second segment 30b may be defined as a single code block 40c. 2bit ACK/NACK may be reported with a separate ACK/NACK per segment 30a, 30b. In other words, the first format, for example for Nc=2, of the payload data packet or transport block may indicate two data blocks 40a, 40b in the payload data packet. The first acknowledgment format indicates one acknowledgment information element (first feedback bit) for acknowledgement of the reception of one of the two data blocks 40a and one acknowledgment information element (second feedback bit) for acknowledgement of the reception of the other of the two data blocks 40b. The second format of the payload data packet, e.g. Nc=3, indicates more than two data blocks 40a, 40b, 40c in the payload data packet. The second acknowledgment format indicates one acknowledgment information element (first feedback bit) for acknowledgement of the reception of more than one of the more than two data blocks 40a, 40b and one acknowledgment information element (second feedback bit) for the other one or more data blocks 40c of the more than two data blocks 40a, 40b, 40c in the payload data packet.

As shown in Fig. 2 the subsequent formats can be used accordingly. In case of Nc=4 code blocks 40a, 40b, 40c, 40d, a segment 30a, 30b may be defined as a pair of code blocks 40a, 40b and 40c, 40d. 2bit ACK/NACK may be reported with a separate ACK/NACK per segment 30a, 30b.

In case of Nc=5 code blocks, the first segment 30a may be defined as a triple of code blocks 40a, 40b, 40c and a second segment 30b may be defined as a pair of code blocks 40d, 40e. 2bit ACK/NACK may be reported with a separate ACK/NACK per segment 30a, 30b.

In case of Nc=6 code blocks, a segment may be defined as a triple of code blocks, 2bit ACK/NACK may be reported with a separate ACK/NACK per segment, etc., and so on.

In embodiments the code or data blocks 40a-e within a segment 30a, 30b may be adjacent or non-adjacent (interleaved).

The above embodiment in shorter expression can be described as:
Nc=1: N=1; Nsc=1, segment = code block 40a,
Nc=2: N=2, Nsc=1, segment = code block 40a or 40b,
Nc=3: N=2, Nsc=2, segment = code block pair 40ab or 40c,
Nc=4: N=2, Nsc=2, segment = code block pair 40ab or 40cd,
Nc=5: N=2, Nsc=3, segment = code block triple 40abc or 40de, and
Nc=6: N=2, Nsc=3, segment = code block triple 40abc or 40de plus one code block.

For N=2, a separate ACK/NACK is reported for each segment, while for N=1 a single bit ACK/NACK plus an optional 1bit reliability feedback (e.g. 3 NACK levels) may be reported for the transport block or payload data packet.

The number N of ACK/NACKs or acknowledgment information elements to be reported (i.e. segments 30a, 30b of the transport block) may be implicitly derived from the transport block size, using predefined segmentation rules. Optionally the number N may also be explicitly signaled to the transmitter for each transport block or for a set of transport blocks.

That is to say that the control module 12 may be operable to determine the information related to the format of the acknowledgement data packet using the receiver module 16 on a receiver side. The receiver module 16 may be operable to receive the information related to the format of the acknowledgement data packet, for example, in terms of explicit signaling. The receiver module 16 may be operable to receive the information related to the format of the payload data packet from a transmitter of the payload data packet, which may implicitly also indicate the format of the acknowledgment data packet. Correspondingly, for the transmitter side, the control module 12 may be operable to use the transmitter module 18 to signal the information related to the format of the acknowledgement data packet and/or the information related to the format of the payload data packet to a receiver of the payload data packet.

Instead of having fixed rate ACK/NACK reporting, the number of segments/ACK/NACKs may also increase with increasing transport block size, for example, by defining a segment equivalent to a code block, until a maximum number of segments/ACK/NACKs is reached. When the maximum number of segments is reached, the number of code blocks per segment will increase to fix the ACK/NACK feedback rate, as described above. Embodiments may therewith allow some variation in the feedback data rate but may use the above described mechanism to limit the feedback data rate to an upper limit.

In embodiments, which allow a number of reported ACK/NACKs (acknowledgment information elements) to be variable, the mapping of ACK/NACKs to channel elements within a predefined pool of available ACK/NACK channel elements may be solved using different options. A first option is to signal to the transmitter of ACK/NACK messages a first start value of the N ACK/NACK channel elements to be used. The rules by which, given the start value, the N ACK/NACK channel elements are selected may be predefined, e.g. a contiguous set of N elements. A second option may be to use multicast/broadcast to inform a set of ACK/NACK transmitters (or all) in a cell about the ACK/NACK channel allocations, e.g. by explicitly signaling the number of ACK/NACKs allocated per transmitter combined with implicit signaling of the order (the latter may be tagged to control channel element used for scheduling grant or some time/frequency parameters etc.).

As indicated above, some embodiments may switch between reliability-based HARQ and Segment HARQ. As indicated in the embodiment above, the HARQ scheme/feedback may be switched, for example, according to the size of the transport block or payload data packet. When a small transport block is transmitted, e.g. comprised of a small number of code or data blocks 40a-d, reliability-feedback for the whole transport block or per segment may be transmitted, for example, as an indication of the quality of the incorrectly received packet or segment, such as the quality of soft bits after decoding (e.g. an estimated bit error probability). Given the reliability feedback, which may comprise reliability information (for example 2 bits), the size, modulation, coding and puncturing of the retransmission format may be adequately selected.

For example, if two bits are mapped on a transmission symbol in the acknowledgment data packet, for example, a Quaternary Phase Shift Keying (QPSK) symbol, then there are four different transmission symbols to transport the information of the two bits. One of these symbols may be used for acknowledgment, i.e. correct reception of the payload data packet, and the remaining three other transmission symbols may be used for different dis-acknowledgments, i.e. incorrect reception of the payload data packet. The different dis-acknowledgments may differ in reliability information they provide. That is to say different levels of reliability information may be indicated, for example, different measures for an error rate in the received payload data packet, different desired retransmission formats, respectively. In other words, the same sized acknowledgment data packet may be used in different formats, mappings or interpretations in association with different formats for the payload data packet. One format, mapping or interpretation may be acknowledgment per segment and another may be reliability information.

When a larger transport block is transmitted, e.g. comprised of a larger number of code or data blocks 40a-d, ACK/NACK is transmitted per segment 30a, 30b, where the segments are defined as described above, where it is to be noted that embodiments are not limited to the above example of two segments, embodiments may allow a larger or a configurable number of segments. NACK'ed segments may be retransmitted, for example using variable size retransmission, or fixed size retransmission filled with new segments, etc. The term "variable size" may refer to a transport block, for example, comprising a variable number of code blocks where only incorrectly received or NACKed code blocks may be retransmitted. The term "fixed size" may refer to a transport block and it may indicate that a fixed number of code blocks may be retransmitted, for example, new transmissions and retransmission to keep the transport block size constant or fixed.

Such switching between reliability based feedback and segment ACK/NACK may be beneficial to fix/contain feedback overhead, or to improve throughput performance. The type of HARQ scheme/feedback used may implicitly be defined as a function of the transport block payload data packet size (it may also be configured e.g. depending on data rate or number of users in the cell).

Embodiments may use segment HARQ and enable an increase of a throughput performance over conventional HARQ as the amount of retransmitted information and feedback information is reduced or controlled.

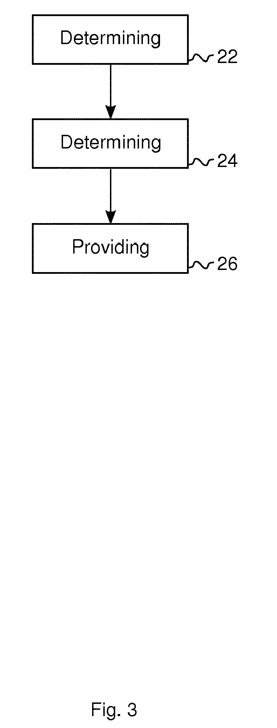

Fig. 3 illustrates a block diagram of a flow chart of an embodiment of a method for controlling information related to acknowledgment of a reception of a payload data packet. The method comprises determining 22 information related to a format of the payload data packet. The information related to the format of the payload data packet comprises information related to a number of data blocks comprised in the payload data packet. The method further comprises determining 24 information related to a format of an acknowledgement data packet, which is associated with the payload data packet, based on the information related to the format of the payload data packet. The information related to the format of the acknowledgement data packet comprises information related to a number of data blocks per acknowledgment information element in the acknowledgement data packet. Two different formats of the acknowledgment data packet indicate different numbers of data blocks being acknowledged per acknowledgment information element. The method further comprises providing 26 the information related to the format of the acknowledgement data packet.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiver", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. A control apparatus (10) operable to control information related to acknowledgment of a reception of a payload data packet, the apparatus (10) comprising
a control module (12) operable to:
determine information related to a format of the payload data packet, the information related to the format of the payload data packet comprising information related to a number of data blocks comprised in the payload data packet;
determine information related to a format of an acknowledgement data packet, which is associated with the payload data packet, based on the information related to the format of the payload data packet, wherein the information related to the format of the acknowledgement data packet comprises information related to a number of data blocks per acknowledgment information element in the acknowledgement data packet, wherein two different formats of the acknowledgment data packet indicate different numbers of data blocks being acknowledged per acknowledgment information element; and
an interface (14) operable to provide the information related to the format of the acknowledgement data packet.

2. The control apparatus (10) of claim 1, wherein the payload data packet corresponds to a transport block of data comprising one or more data segments (30a;30b), wherein a data segment (30a;30b) comprises one or more data blocks (40a;40b;40c;40d;40e) and wherein a data block (40a;40b;40c;40d;40e) corresponds to an encoded block of data, and wherein the format of the acknowledgment data packet indicates one acknowledgment information element per data segment (30a;30b) and/or wherein the format of the acknowledgment data packet indicates one or more acknowledgment information elements relating to reliability information of one or more data segments (30a;30b).

3. The control apparatus (10) of claim 1, further comprising a receiver module (16), which is operable to receive the payload data packet, and a transmitter module (18), which is operable to transmit the acknowledgement data packet.

4. The control apparatus (10) of claim 3, wherein the control module (12) is operable to determine the information related to the format of the acknowledgement data packet using the receiver module (16), wherein the receiver module (16) is operable to receive the information related to the format of the acknowledgement data packet and/or the information related to the format of the payload data packet from a transmitter of the payload data packet.

5. The control apparatus (10) of claim 1, further comprising a transmitter module (18), which is operable to transmit the payload data packet, and a receiver module (16), which is operable to receive the acknowledgment data packet.

6. The control apparatus (10) of claim 5, wherein the control module (12) is operable to use the transmitter module (18) to signal the information related to the format of the acknowledgement data packet and/or the information related to the format of the payload data packet to a receiver of the payload data packet.

7. The control apparatus (10) of claim 1, wherein the control module (12) is operable to assign a first format of an acknowledgement data packet to a first format of a payload data packet, and wherein the control module (12) is operable to assign a second format of an acknowledgement data packet to a second format of a payload data packet, wherein the second format of the payload data packet comprises a higher number of data blocks (40a;40b;40c;40d;40e) than the first format of the payload data packet, and wherein the second format of the acknowledgment data packet comprises as many acknowledgment information elements as the first format of the acknowledgment data packet.

8. The control apparatus (10) of claim 7, wherein the first format of the acknowledgement data packet indicates at least one acknowledgement information element in the acknowledgement data packet, which comprises reliability information related to an incorrectly received data block (40a;40b;40c;40d;40e).

9. The control apparatus (10) of claim 7, wherein the first format of the payload data packet indicates one data block (40a) in the payload data packet, and wherein the first acknowledgment format indicates one acknowledgment information element for acknowledgement of the reception of the data block (40a) and one acknowledgment information element for information related to a reception quality in case the payload data packet (40a) is received incorrectly, and wherein the second format of the payload data packet indicates two data blocks (40a;40b) in the payload data packet, and wherein the second acknowledgment format indicates one acknowledgment information element for acknowledgement of the reception of one of the two data blocks (40a) and one acknowledgment information element for acknowledgement of the reception of the other of the two data blocks (40b).

10. The control apparatus (10) of claim 7, wherein the first format of the payload data packet indicates two data blocks (40a;40b) in the payload data packet, and wherein the first acknowledgment format indicates one acknowledgment information element for acknowledgement of the reception of one of the two data blocks (40a) and one acknowledgment information element for acknowledgement of the reception of the other of the two data blocks (40b), and wherein the second format of the payload data packet indicates more than two data blocks (40a;40b;40c;40d;40e) in the payload data packet, and wherein the second acknowledgment format indicates one acknowledgment information element for acknowledgement of the reception of more than one of the more than two data blocks (40a;40b;40c;40d;40e) and one acknowledgment information element for the other one or more data blocks of the more than two data blocks (40a;40b;40c;40d;40e) in the payload data packet.

11. The control apparatus (10) of claim 1, wherein an acknowledgment information element in the acknowledgement data packet corresponds to a binary value.

12. A base station transceiver of a mobile communication system comprising the apparatus (10) of claim 1.

13. A mobile transceiver of a mobile communication system comprising the apparatus (10) of claim 1.

14. A method for controlling information related to acknowledgment of a reception of a payload data packet, the method comprising
determining information related to a format of the payload data packet, the information related to the format of the payload data packet comprising information related to a number of data blocks comprised in the payload data packet;
determining information related to a format of an acknowledgement data packet, which is associated with the payload data packet, based on the information related to the format of the payload data packet, wherein the information related to the format of the acknowledgement data packet comprises information related to a number of data blocks per acknowledgment information element in the acknowledgement data packet, wherein two different formats of the acknowledgment data packet indicate different numbers of data blocks being acknowledged per acknowledgment information element; and providing the information related to the format of the acknowledgement data packet.

15. A computer program having a program code for performing the method of claim 14, when the computer program is executed on a computer, a processor, or a programmable hardware component

## Amended claims

### Amended claims in accordance with Rule 137(2) EPC.

1. A control apparatus (10) operable to control information related to acknowledgment of a reception of a payload data packet, the apparatus (10) comprising
a control module (12) operable to:
determine information related to a format of the payload data packet, the information related to the format of the payload data packet comprising information related to a number of data blocks comprised in the payload data packet;
determine information related to a format of an acknowledgement data packet, which is associated with the payload data packet, based on the information related to the format of the payload data packet, wherein the information related to the format of the acknowledgement data packet comprises information related to a number of data blocks per acknowledgment information element in the acknowledgement data packet, wherein two different formats of the acknowledgment data packet indicate different numbers of data blocks being acknowledged per acknowledgment information element; and
an interface (14) operable to provide the information related to the format of the acknowledgement data packet, wherein the format of the acknowledgment data packet indicates one or more acknowledgment information elements relating to reliability information of the payload data packet.

2. The control apparatus (10) of claim 1, wherein the payload data packet corresponds to a transport block of data comprising one or more data segments (30a;30b), wherein a data segment (30a;30b) comprises one or more data blocks (40a;40b;40c;40d;40e) and wherein a data block (40a;40b;40c;40d;40e) corresponds to an encoded block of data, and wherein the format of the acknowledgment data packet indicates one acknowledgment information element per data segment (30a;30b) or wherein the format of the acknowledgment data packet indicates one or more acknowledgment information elements relating to reliability information of one or more data segments (30a;30b).

3. The control apparatus (10) of claim 1, further comprising a receiver module (16), which is operable to receive the payload data packet, and a transmitter module (18), which is operable to transmit the acknowledgement data packet.

4. The control apparatus (10) of claim 3, wherein the control module (12) is operable to determine the information related to the format of the acknowledgement data packet using the receiver module (16), wherein the receiver module (16) is operable to receive the information related to the format of the acknowledgement data packet or the information related to the format of the payload data packet from a transmitter of the payload data packet.

5. The control apparatus (10) of claim 1, further comprising a transmitter module (18), which is operable to transmit the payload data packet, and a receiver module (16), which is operable to receive the acknowledgment data packet.

6. The control apparatus (10) of claim 5, wherein the control module (12) is operable to use the transmitter module (18) to signal the information related to the format of the acknowledgement data packet or the information related to the format of the payload data packet to a receiver of the payload data packet.

7. The control apparatus (10) of claim 1, wherein the control module (12) is operable to assign a first format of an acknowledgement data packet to a first format of a payload data packet, and wherein the control module (12) is operable to assign a second format of an acknowledgement data packet to a second format of a payload data packet, wherein the second format of the payload data packet comprises a higher number of data blocks (40a;40b;40c;40d;40e) than the first format of the payload data packet, and wherein the second format of the acknowledgment data packet comprises as many acknowledgment information elements as the first format of the acknowledgment data packet.

8. The control apparatus (10) of claim 7, wherein the first format of the acknowledgement data packet indicates at least one acknowledgement information element in the acknowledgement data packet, which comprises reliability information related to an incorrectly received data block (40a;40b;40c;40d;40e).

9. The control apparatus (10) of claim 7, wherein the first format of the payload data packet indicates one data block (40a) in the payload data packet, and wherein the first acknowledgment format indicates one acknowledgment information element for acknowledgement of the reception of the data block (40a) and one acknowledgment information element for information related to a reception quality in case the payload data packet (40a) is received incorrectly, and wherein the second format of the payload data packet indicates two data blocks (40a;40b) in the payload data packet, and wherein the second acknowledgment format indicates one acknowledgment information element for acknowledgement of the reception of one of the two data blocks (40a) and one acknowledgment information element for acknowledgement of the reception of the other of the two data blocks (40b).

10. The control apparatus (10) of claim 7, wherein the first format of the payload data packet indicates two data blocks (40a;40b) in the payload data packet, and wherein the first acknowledgment format indicates one acknowledgment information element for acknowledgement of the reception of one of the two data blocks (40a) and one acknowledgment information element for acknowledgement of the reception of the other of the two data blocks (40b), and wherein the second format of the payload data packet indicates more than two data blocks (40a;40b;40c;40d;40e) in the payload data packet, and wherein the second acknowledgment format indicates one acknowledgment information element for acknowledgement of the reception of more than one of the more than two data blocks (40a;40b;40c;40d;40e) and one acknowledgment information element for the other one or more data blocks of the more than two data blocks (40a;40b;40c;40d;40e) in the payload data packet.

11. The control apparatus (10) of claim 1, wherein the reliability information relates to an incorrect reception of the payload data packet, an error rate of the received payload data packet, or a desired retransmission format for the payload data packet or wherein the acknowledgement data packet comprises two bits mapped on a quaternary phase shift keying transmission symbol having four different transmission symbols to transport the information of the two bits, wherein one of the symbols is used for an acknowledgment of correct reception of the payload data packet, and the remaining three transmission symbols are used for dis-acknowledgments of correct reception of the payload data packet..

12. A base station transceiver of a mobile communication system comprising the apparatus (10) of claim 1.

13. A mobile transceiver of a mobile communication system comprising the apparatus (10) of claim 1.

14. A method for controlling information related to acknowledgment of a reception of a payload data packet, the method comprising
determining information related to a format of the payload data packet, the information related to the format of the payload data packet comprising information related to a number of data blocks comprised in the payload data packet;
determining information related to a format of an acknowledgement data packet, which is associated with the payload data packet, based on the information related to the format of the payload data packet, wherein the information related to the format of the acknowledgement data packet comprises information related to a number of data blocks per acknowledgment information element in the acknowledgement data packet, wherein two different formats of the acknowledgment data packet indicate different numbers of data blocks being acknowledged per acknowledgment information element; and providing the information related to the format of the acknowledgement data packet, wherein the format of the acknowledgment data packet indicates one or more acknowledgment information elements relating to reliability information of the payload data packet.

15. A computer program having a program code for performing the method of claim 14, when the computer program is executed on a computer, a processor, or a programmable hardware component.
